# EUROPÄISCHE PATENTANMELDUNG

(11) **EP 0 594 102 A1**
(43) Veröffentlichungstag der Anmeldung: **27.04.1994**
(21) Anmeldenummer: 93116784.5
(22) Anmeldetag: 18.10.1993
(51) Int. Cl.: H04N 3/09, G01J 5/00, G01J 5/52

(54) **IR-Fernthermometer**

(30) Priorität: 23.10.1992 DE 4235772
(71) Anmelder: Menke, Josef-Ferdinand, Dipl.-Ing., D-24960 Glücksburg (DE)
(72) Erfinder: Menke, Josef-Ferdinand, Dipl.-Ing., D-24960 Glücksburg (DE)
(74) Vertreter: Riecke, Manfred

(57) **Zusammenfassung**

Es wird ein IR-Fernthermometer zum berührungslosen Messen der Temperatur eines Objektes aus einem vorgegebenen Abstand beschrieben. Das Thermometer zeichnet sich aus durch die Kombination eines an sich bekannten homogenisierten IR-Bildes mit einem in seiner Temperatur bekannten und geregelten schwarzen Strahler, wobei die Objekttemperatur durch Vergleich der gemessenen Objekt-Strahlungsleistung mit der Leistung des schwarzen Strahlers ermittelt wird. Dabei werden in die Bildverarbeitungs-Elektronik atmosphärische Korrekturfaktoren eingegeben, so daß die atmosphärische Dämpfung der Objekt-Strahlungsleistung unmittelbar berücksichtigt wird. Als schwarzer Strahler wird eine temperaturgeregelte Klemmfläche im Gerät benutzt, auf deren Signalgröße alle vom Objekt ausgehenden Signale bezogen werden.

## Beschreibung

Die Erfindung betrifft ein Verfahren zum berührungslosen Messen der Temperatur von Objekten. Die Messung geschieht durch die quantitative Erfassung der vom Objekt emittierten Infrarotstrahlung innerhalb einer bestimmten spektralen Bandbreite. Bei heißen Objekten oder in verseuchter oder unzugänglicher Umgebung ermöglicht ein Fernthermometer eine gefahrlose Temperaturmessung aus sicherer Distanz.

Zur Ferntemperaturmessung ist es bereits bekannt, die vom Objekt ausgehende zu messende Strahlung mit der Strahlung eines Eichstrahlers (Schwarzen Körpers) zu vergleichen, wobei abwechselnd die Referenzstrahlung und die Strahlung der das Objekt enthaltenden Szene auf die Eingangsoptik des Fernthermometers gelenkt wird. Dazu benutzt man in der Regel einen mechanischen Modulator, etwa in Form eines Flügelrades, dessen Oberfläche verspiegelt ist.

Eine solche Anordnung hat jedoch den Nachteil, daß durch das Flügelrad, als relativ schweres, mechanisch bewegtes Teil, die Zeit für eine Temperaturmessung auf mindestens etwa 1 sec begrenzt ist. Dadurch steht das Infrarotbild des Objektes, das vom Fernthermometer erfaßt wird, nicht ununterbrochen zur Verfügung.

Der Erfindung liegt die Aufgabe zugrunde, diesen Nachteil zu überwinden und ein Fernthermometer anzugeben, bei dem die Temperaturmessung im Millisekundentakt möglich ist.

Diese Aufgabe ist durch ein IR-Fernthermometer gelöst, das die in Anspruch 1 angegebenen Merkmale aufweist.

Gemäß der Erfindung wird ein vorgegebenes Bildfeld mit einem Zeilendetektors abgerastert. Zur Homogenisierung des erzeugtn Bildes werden von Bild zu Bild wechselnde Detektorelemente an der Darstellung jeder Bildschirmzeile beteiligt.
Am Beginn und am Ende jedes Zeilenscans wird die Strahlung einer innerhalb des Gerätes geeignet untergebrachten Klemmfläche auf den Detektor gelenkt. Auf das von dieser Strahlung erzeugte Signal werden alle von der Szene ausgehenden Signalgrößen bezogen ("Klemmung").

In weiterer Ausgestaltung der Erfindung wird außerdem noch vorgeschlagen, die Klemmfläche als einen temperaturgeregelten schwarzen Strahler auszuführen (Anspruch 2). Dadurch erhält man ein Infrarot-Fernthermometer, das für alle gängigen Fernsehnormen passend ausgelegt werden kann. Entsprechend liegt die Zeitauflösung der Messung im Millisekunden-Bereich, und das Infrarotbild steht ohne Unterbrechung zur Verfügung.

Versieht man das IR-Fernthermometer zusätzlich noch mit einem geeigneten Prozessor zur Eingabe von Korrekturfaktoren wie Emissivität des Objektes und metereologischer Daten, aus denen die atmosphärische Dämpfung des Infrarotsignals zwischen Objekt und Eingangsoptik des Thermometers berechnet wird, so steht die gemessene Objekttemperatur zeitgleich mit dem Infrarotbild der Szene zur Verfügung.

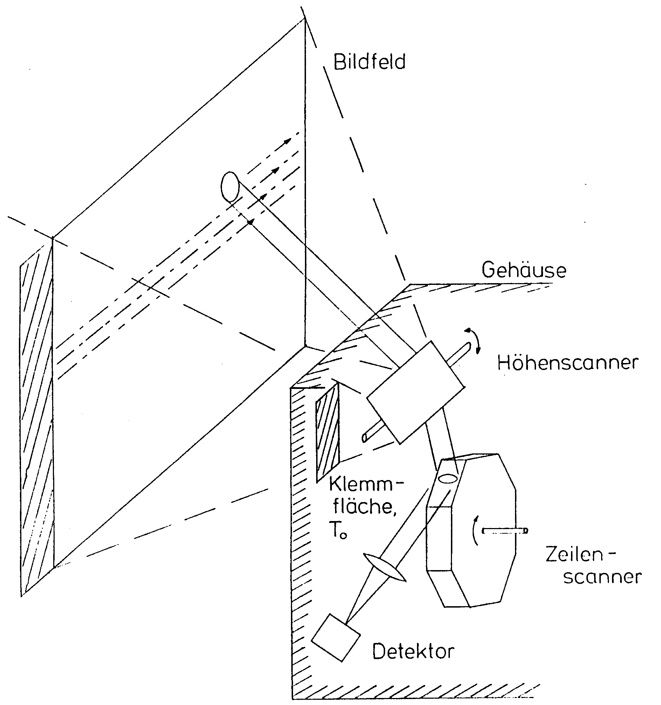

In der Zeichnung ist schematisch ein Fernthermometer der erfundenen Art dargestellt. Die Zeichnung zeigt auf der einen Seite das Bildfeld und auf der anderen Seite das Gehäuse des Gerätes, in dem die vom Bildfeld kommenden Strahlen durch einen Höhenscanner und einen Zeilenscanner zu einem zeilenweise aus einzelnen Elementen zusammengesetzten Detektor reflektiert wird. Das Bildfeld enthält die Szene, deren Temperatur ermittelt werden soll.

Innerhalb des Gehäuses ist die in der Darstellung gezeigte Klemmfläche angeordnet, die gemäß der Erfindung als temperaturgeregelter schwarzer Strahler mit definierter Temperatur Tₒ augebildet ist. Seine Strahlung wird über den Höhen- und Zeilenscanner pro Zeilenscan einmal dem Detektor zugeführt.

Der schraffierte Teil des Bildfeldes in der Zeichnung stellt die Projektion der Klemmfläche in das Bildfeld dar. Allerdings dient diese Darstellung nur der Erläuterung. Die zum Detektor gelangenden Strahlen aus der entsprechenden Richtung gehen stets von der gezeigten Klemmfläche aus.

Das abgebildete Ausführungsbeispiel zeigt nur die einfachste Anordnung von Zeilen- und Höhenscanner. In der Regel wird ein entsprechendes Gerät mit weiteren optischen Elementen oder Baugruppen aufgebaut sein, wie beispielsweise einem Teleskopvorsatz. Falls durch solche optischen Elemente Zwischenbildebenen entnworfen werden, die den Ablauf eines oder mehrerer Zeilenscans enthalten, so wird die Klemmfläche vorzugsweise in der Zwischenbildebene angeordnet, da hier die Zeit für den Überlauf des IR-Lichtbündels über die Kante der Klemmfläche am geringsten ist.

## Patentansprüche

1. IR-Fernthermometer zum berührungslosen Messen der Temperatur eines Objektes aus einem vorgegebenen Abstand mittels IR-Strahlen, unter Verwendung eines im etwa 25 Hz-Rythmus scannenden Zeilendetectors,
gekennzeichnet durch die Kombination
eines an sich bekannten, durch von Bild zu Bild wechselnde Beteiligung der Detector-Elemente an der Darstellung jeder Bildschirmzeile homogenisierten IR-Bildes,
mit einem in seiner Temperatur bekannten und geregelten schwarzen Strahler,
und der Eingabe atmosphärischer Korrekturfaktoren in die Bildverarbeitungs-Elektronik,
wobei die Objekttemperatur durch Vergleich der gemessenen Objekt-Strahlungsleistung mit der Leistung des schwarzen Strahlers ermittelt wird.

2. IR-Fernthermometer nach Anspruch 1, dadurch gekennzeichnet, daß als schwarzer Strahler eine temperaturgeregelte Klemmfläche im Gerät benutzt wird, auf deren Signalgröße alle vom Objekt ausgehenden Signale durch die Bildverarbeitungs-Elektronik bezogen werden, in welche auch die Korrekturfaktoren, z.B. bezüglich der Emissitivität des Objektes und der atmosphärischen Dämpfung, als Festdaten einprogrammierbar sind.
